# EUROPEAN PATENT APPLICATION

(11) **EP 4 391 631 A1**
(43) Date of publication of application: **26.06.2024**
(21) Application number: 22858124.5
(22) Date of filing: 13.05.2022
(51) Int. Cl.: H04W 24/04, H04W 48/08, H04W 48/18

(54) **SERVER, USER EQUIPMENT, AND METHODS THEREFOR**

(30) Priority: 17.08.2021 JP 2021132616
(71) Applicant: NEC Corporation, 108-8001 Tokyo (JP)
(72) Inventor: TAKAKURA Tsuyoshi, Tokyo 110-0012 (JP); TAMURA Toshiyuki, Tokyo 108-8001 (JP)
(74) Representative: MacDougall, Alan John Shaw
(86) International application number: PCT/JP2022/020186
(87) International publication number: WO 2023/021800

(57) **Abstract**

A first edge enabler server (EES) (SA) sends a control message to an edge configuration server (7) or an edge enabler client (EEC) (2) of a User Equipment (UE) indicating that the first EES is scheduled to be shut down or be unavailable. This can allow, for example, the edge configuration server or the EEC or both to perform any processing or procedure necessary to avoid or mitigate the effects of a planned shutdown of the EES.

## Description

### Technical Field

The present disclosure relates to radio communication networks, and in particular to devices and methods for edge computing.

### Background Art

Edge computing aims to move applications, data, and computing power (services) from centralized points (e.g., centralized data centers) to locations closer to users (e.g., distributed data centers). The Industry Specification Group called Multi-access Edge Computing (MEC) of the European Telecommunications Standards Institute (ETSI) has standardized an application platform and APIs for edge computing. For example, MEC provides application developers and content providers with cloud computing capabilities and information technology (IT) service environments within a Radio Access Network (RAN) in close proximity to mobile subscribers. This environment provides ultra-low latency and high bandwidth, as well as direct access to radio network information (radio network information generation) (e.g., subscriber location and cell load) that can be leveraged by applications and services.

The Third Generation Partnership Project (3GPP (registered trademark)) SA6 working group is conducting standardization work on an architecture for enabling Edge Applications. (See, for example, Non-Patent Literature 1). This 3GPP architecture may be referred to as the EDGEAPP architecture. The EDGEAPP architecture provides a specification of an enabling layer to facilitate communication between application clients (ACs) running on a User equipment (UE) and applications deployed at the edge. According to the EDGEAPP architecture, edge applications provided by Edge Application Servers (EASs) are provided to ACs in a UE by an Edge Configuration Server (ECS) and an Edge Enabler Server (EES) through an Edge Enabler Client (EEC) of that UE.

An AC running on a UE needs to discover a server application (i.e., EAS in 3GPP SA6 terminology, or MEC application in ETSI ISG MEC terminology) on an Edge Cloud. The AC can use another client on the UE, i.e., the EEC, for discovery of the server application. The EEC provides ACs with discovery of available EASs in an Edge Data Network (EDN). An EDN is a local data network that supports an architecture for enabling edge applications. An EDN includes one or more EESs and one or more EASs.

A UE is initially provisioned by an ECS with configuration information required to connect to an EDN. More specifically, the EEC of the UE communicates with the ECS for service provisioning. Service provisioning allows the EEC to be configured with configuration information about available Edge Computing services, based on the UE's location, service requirements, and connectivity. This configuration information for an individual EDN is called EDN configuration information. The ECS provides the EEC with a list of EDN configuration information for one or more EDNs.

The EEC then selects an EES based on the EDN configuration information. The EEC may perform a registration procedure, called EEC registration, with the EES to provide information that can be used by the EES in edge computing services. The EEC registration allows the EES to perform the creation (initialization), update and removal of information resources related to the EEC. The EEC registration also enables the sharing of EEC Context among entities (e.g., UE and Application Server) in the EDGEAPP architecture. The determination of whether or not EEC registration is permitted (EEC Registration Permit Decision) is based on the security credentials and/or at least one Application Client Profile (AC Profile(s)) provided by the EEC. For EEC registration, the EEC issues an EEC registration request to the EES.

In addition, the EEC can communicate with the EES and perform EAS discovery for ACs. EAS discovery allows the EEC to obtain information about available EASs of interest. Discovery of an EAS(s) is based on matching EAS discovery filters provided by the EEC. To perform EAS discovery, the EEC issues an EAS discovery request to the EES to obtain information about devices, connections, or configurations required to provide services on the EDN. This information includes, for example, information about available edge computing services and information about servers in the EDN.

### Citation List

### Non Patent Literature

[Non-Patent Literature 1] 3GPP TS 23.558 V17.0.0 (2021-06) "3rd Generation Partnership Project; Technical Specification Group Services and System Aspects; Architecture for enabling Edge Applications; (Release 17)", June 2021

### Summary of Invention

### Technical Problem

The inventors have studied the EDGEAPP architecture and found various problems. One of these problems relates to the planned shutdown of an EES. Planned shutdown can also be called scheduled shutdown, controlled shutdown, or graceful shutdown. Specifically, it may be desirable that when an EES (hereafter referred to as EES-A) is planned to be shut down or be unavailable, the EEC context managed by the EES-A is taken over by another EES. To achieve this, it would be useful to prompt an EEC registered with the EES-A to send an EEC registration request to an EES-B before the EES-A is shut down. However, such a procedure is not specified in Non-Patent Literature 1.

Another one of the problems also relates to the planned shutdown of an EES. In particular, it may be desirable that the EECs already registered with an EES (hereafter referred to as EES-A) be notified in advance of the planned shutdown or unavailability of the EES-A. This could potentially allow the EECs to take appropriate actions, such as successfully deregistering from the EES-A or requesting another EES-B to perform their EEC registration. However, such a procedure is not specified in Non-Patent Literature 1.

One of the objects to be attained by example embodiments disclosed herein is to provide apparatuses, methods, and programs that contribute to solving at least one of the above-described problems. It should be noted that this object is merely one of the objects to be attained by the example embodiments disclosed herein. Other objects or problems and novel features will be made apparent from the following description and the accompanying drawings.

### Solution to Problem

In a first aspect, a first EES includes a memory and at least one processor coupled to the memory. The at least one processor is configured to send a control message to an edge configuration server indicating that the first EES is scheduled to be shut down or be unavailable.

In a second aspect, a method performed by a first EES includes sending a control message to an edge configuration server indicating that the first EES is scheduled to be shut down or be unavailable.

In a third aspect, a first EES includes a memory and at least one processor coupled to the memory. The at least one processor is configured to send a control message to a UE indicating that the first EES is scheduled to be shut down or be unavailable.

In a fourth aspect, a method performed by a first EES includes sending a control message to a UE indicating that the first EES is scheduled to be shut down or be unavailable.

In a fifth aspect, an edge configuration server includes a memory and at least one processor coupled to the memory. The at least one processor is configured to receive a control message from a first EES indicating that the first EES is scheduled to be shut down or be unavailable. The at least one processor is configured to, depending on receiving the control message, send a service provisioning notification or response to a UE prompting the UE to send an EEC registration request to a second EES different from the first EES.

In a sixth aspect, a method performed by an edge configuration server includes: (a) receiving a control message from a first EES indicating that the first EES is scheduled to be shut down or be unavailable; and (b) depending on receiving the control message, sending a service provisioning notification or response to a UE prompting the UE to send an EEC registration request to a second EES different from the first EES.

In a seventh aspect, an edge configuration server includes a memory and at least one processor coupled to the memory. The at least one processor is configured to receive a control message from a first EES indicating that the first EES is scheduled to be shut down or be unavailable. The at least one processor is configured to, depending on receiving the control message, send a service provisioning notification or response to a UE indicating that the first EES is scheduled to be shut down or be unavailable.

In an eighth aspect, a method performed by an edge configuration server includes: (a) receiving a control message from a first EES indicating that the first EES is scheduled to be shut down or be unavailable; and (b) depending on receiving the control message, sending a service provisioning notification or response to a UE indicating that the first EES is scheduled to be shut down or be unavailable.

In a ninth aspect, a UE includes a memory and at least one processor coupled to the memory. The at least one processor is configured to receive a control message from a first EES or an edge configuration server indicating that the first EES is scheduled to be shut down or be unavailable. The at least one processor is configured to, depending on receiving the control message, send an edge enabler client (EEC) registration request to a second EES different from the first EES.

In a tenth aspect, a method performed by a UE includes: (a) receiving a control message from a first EES or an edge configuration server indicating that the first EES is scheduled to be shut down or be unavailable; and (b) depending on receiving the control message, sending an edge enabler client (EEC) registration request to a second EES different from the first EES.

In an eleventh aspect, a UE includes a memory and at least one processor coupled to the memory. The at least one processor is configured to receive a control message from a first EES or an edge configuration server indicating that the first EES is scheduled to be shut down or be unavailable. The at least one processor is configured to, depending on receiving the control message, send an EEC deregistration request to the first EES.

In a twelfth aspect, a method performed by a UE includes: (a) receiving a control message from a first EES or an edge configuration server indicating that the first EES is scheduled to be shut down or be unavailable; and (b) depending on receiving the control message, sending an EEC deregistration request to the first EES.

In a thirteenth aspect, a program includes a set of instructions (software codes) that, when loaded into a computer, cause the computer to perform the method according to any of the second, fourth, sixth, eighth, tenth, and twelfth aspects described above.

### Advantageous Effects of Invention

According to the above-described aspects, it is possible to provide apparatuses, methods, and programs that contribute to solving at least one of the above-mentioned problems.

### Brief Description of Drawings

Fig. 1 shows an example of the architecture of a network according to an example embodiment;
Fig. 2 is a sequence diagram showing an example of the operation of an EES and an ECS according to an example embodiment;
Fig. 3 is a flowchart showing an example of the operation of an ECS according to an example embodiment;
Fig. 4 is a flowchart showing an example of the operation of an ECS according to an example embodiment;
Fig. 5 is a flowchart showing an example of the operation of an EEC according to an example embodiment;
Fig. 6 is a flowchart showing an example of the operation of an EEC according to an example embodiment;
Fig. 7 is a sequence diagram showing an example of the operation of an EEC, an EES, and an ECS according to an example embodiment;
Fig. 8 is a sequence diagram showing an example of the operation of an EEC, an EES, and an ECS according to an example embodiment;
Fig. 9 is a sequence diagram showing an example of the operation of an EEC and an EES according to an example embodiment;
Fig. 10 is a flowchart showing an example of the operation of an EEC according to an example embodiment;
Fig. 11 is a flowchart showing an example of the operation of an EEC according to an example embodiment;
Fig. 12 is a sequence diagram showing an example of the operation of an EEC, an EES, and an ECS according to an example embodiment;
Fig. 13 is a sequence diagram showing an example of the operation of an EEC, an EES, and an ECS according to an example embodiment;
Fig. 14 is a block diagram showing an example configuration of a UE according to an example embodiment; and
Fig. 15 is a block diagram showing an example configuration of a server according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are described primarily for the 3GPP system (e.g., 5G system (5GS)). However, these example embodiments may be applied to other radio communication systems.

As used in this specification, "if" can be interpreted to mean "when", "at or around the time", "after", "upon", "in response to determining", "in accordance with a determination", or "in response to detecting", depending on the context.

### First Example Embodiment

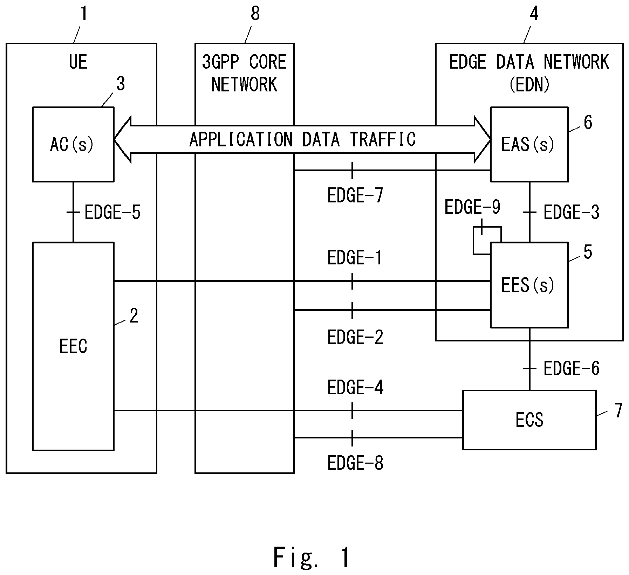

Fig. 1 illustrates an example of the architecture of a network according to a plurality of example embodiments, including this example embodiment. The architecture in Fig. 1 corresponds to the 3GPP EDGEAPP architecture. Each of the elements shown in Fig. 1 is a functional entity that provides functions and interfaces as defined by the 3GPP. Each of the elements (functional entities) shown in Fig. 1 can be implemented, for example, as a network element on dedicated hardware, as a software instance running on dedicated hardware, or as a virtualized function instantiated on an application platform.

In the example in Fig. 1, a User Equipment (UE) 1 includes an Edge Enabler Client (EEC) 2 and one or more Application Clients (ACs) 3. In other words, an EEC 2 and one or more ACs 3 are deployed in the UE 1 and run on the UE 1. Although not explicitly shown in Fig. 1, the UE 1 communicates with a 3GPP core network 8 via an access network (e.g., Radio Access Network (e.g., NG Radio Access Network (NG-RAN))). In this way, the UE 1 provides the EEC 2 and the AC(s) 3 with connectivity to a data network via the access network and the 3GPP core network 8. The 3GPP core network 8 may be one or a combination of a 5G Core (5GC) and an Evolved Packet Core (EPC).

The EEC 2 provides supporting functions required by the AC(s) 3. Specifically, the EEC 2 provides provisioning of configuration information to enable the exchange of application data traffic with an Edge Application Server (EAS). In addition, the EEC 2 provides functionality for discovery of one or more EASs available within an Edge Data Network (EDN) 4. The EEC 2 uses EAS endpoint information obtained from the EAS discovery in routing of outgoing application data traffic to an EAS. The EEC 2 also provides functionality for EEC registration (i.e., registration, update, and de-registration) with one or more Edge Enabler Servers (EESs) 5.

Each AC 3 is an application running on the UE 1. Each AC 3 connects to one or more EASs to utilize edge computing services and exchanges application data traffic with the EASs.

The EDN 4 is a local data network that supports an architecture that enables edge applications. The one EDN 4 contains one or more EESs 5 and one or more EASs 6. The EDN 4 may be a Local Area Data Network (LADN). An LADN allows limited access to a DN (and its corresponding Data Network Name (DNN)) only in one or more specific areas. Outside of these areas, the UE 1 cannot access the corresponding DN (and DNN). An area where LADN DNN is available is called an LADN Service Area and is configured in the network as a set of Tracking Areas (TAs). DNNs that do not use LADN features do not have a LADN service area and are not restricted by these features. An LADN service area can be provided to the UE 1 by an Access and Mobility Management Function (AMF) in the 3GPP core network 8 when the UE 1 registers. This allows the UE 1 to know the area in which the LADN (or EDN) is available and not to attempt to access this LADN (or EDN) outside of this area.

Each EES 5 provides supporting functions required by one or more EASs 6 and the EEC 2. In particular, each EES 5 provides configuration information to the EEC 2, thereby enabling the EEC 2 to exchange application data traffic with an EAS(s) 6. Each EES 5 provides registration functionality (i.e., registration, update, and de-registration) of the EEC 2 and the EAS(s) 6. EEC registration allows the EES 5 to perform the creation (initialization), update, and removal of information resources associated with the EEC 2. With EEC registration, the EES 5 manages the EEC context of the EEC 2.

The EEC context contains information about the EEC 2 for receiving edge enabler services. Specifically, the EEC context can include an EEC context ID, source EES endpoint information, and a service session context. The EEC context ID is an identifier assigned to the EEC context. The source EES endpoint information is the endpoint address (e.g., one or both of a Uniform Resource Identifier (URI) and an Internet Protocol (IP) address) of an EES 5A that provided the EEC context. The service session context may include the identifier (EAS ID) of an EAS 6 that provides the application service and the endpoint information (e.g., one or both of a URI and an IP address) of that EAS 6.

Each EES 5 provides functionality for application context transfer between EASs. This functionality is required for edge application mobility (or application context relocation) for service continuity. Edge application mobility relocates the application context or application instance or both for a user (i.e., AC) from a source EAS (or EDN or LADN) to a target EAS (or EDN or LADN). Edge application mobility can be triggered by UE mobility events or non-UE mobility events. UE mobility events include, for example, intra-EDN UE mobility, inter-EDN UE mobility, and LADN-related UE mobility. Non-UE mobility events include, for example, EAS or EDN overload situations and EAS maintenance (e.g., graceful shutdown of an EAS).

Each EES 5 supports the functionality of an Application Programming Interface (API) invoker and API exposer. Each EES 5 may interact with the 3GPP core network 8 directly (e.g., via a Policy Control Function (PCF) or a Policy Control and Charging Rules Function (PCRF)) or indirectly (e.g., via a Network Exposure Function (NEF) or Service Capability Exposure Function (SCEF)) to access services and capabilities of network functions in the 3GPP core network 8. Each EES 5 may support external exposure of services and capabilities of 3GPP network functions to EAS(s) 6.

Each EAS 6 is located in the EDN 4 and performs server functions of an application. The server functions of an application can only be available at the edge. In other words, the server functions of an application may only be available as an EAS. However, the server functions of an application may be available both at the edge and in the cloud. In other words, the server functions of an application may be available as an EAS and also as an application server in the cloud. The term "cloud" here means a central cloud that is located further away from the UE 1 than the EDN 4. Accordingly, an application server in the cloud means a server deployed in a centralized location (e.g., a centralized data center). Each EAS 6 may consume or utilize 3GPP core network capabilities. Each EAS 6 may directly invoke 3GPP core network function APIs. Alternatively, each EAS 6 may consume or utilize 3GPP core network capabilities via the EES 5, or via a NEF or SCEF.

An Edge Configuration Server (ECS) 7 provides supporting functions required by the EEC 2 to connect to an EES(s) 5. In particular, the ECS 7 provides the provisioning of a list of EDN configuration information for one or more EDNs to the EEC 2. The EDN configuration information includes, for a given EDN (e.g., the EDN 4), the configurations required for the EEC 2 to connect to the EDN. Specifically, the EDN configuration information for the EDN 4 includes the identification (e.g., DNN or Access Point Name (APN)) of the EDN 4 and a list of one or more EESs 5.

More specifically, the EDN configuration information for the EDN 4 includes an "EDN connection information" IE and a "List of EESs" IE, and may also include a "Lifetime" IE. The EDN connection information IE specifies information required for EDN connection. The information required for EDN connection includes a DNN or an APN, and may also include at least one of Single-Network Slice Selection Assistance Information (S-NSSAI) or EDN Topological Service Area. S-NSSAI identifies a network slice. The List of EESs IE specifies a list of one or more EESs 5 in the EDN 4. The EES list includes the EES ID and EES endpoint (e.g., URI, Internet Protocol (IP) address) for each EES. The EES list may include the EAS IDs of one or more EASs 6 associated with each EES. The EES list may include one or more DNAIs associated with each EES or each EAS. The Lifetime IE specifies the validity period of the EDN configuration information. In other words, the Lifetime IE indicates the time duration during which the EDN configuration information is valid and is kept stored or cached in the EEC 2 (or the UE 1).

In addition, the ECS 7 provides registration functionality (i.e., registration, update, and de-registration) of an EES(s) 5. The ECS 7 also supports API invoker and API exposer functionality. The ECS 7 may interact with the 3GPP core network 8 directly (e.g., via a PCF) or indirectly (e.g., via a NEF or SCEF) to access services and capabilities of network functions in the 3GPP core network 8. The ECS 7 may be deployed in the Mobile Network Operator (MNO) domain serving the 3GPP core network 8 or in a third-party domain by a service provider (e.g., an Edge Computing Service Provider (ECSP)).

The example configuration in Fig. 1 shows only representative elements for illustrative purposes. For example, the ECS 7 may be connected to multiple EDNs, including the EDN 4.

The following describes the operation of the EEC 2, EES 5, and ECS 7 with respect to planned shutdown of the EES 5 (hereafter referred to as EES-A or EES 5A). Planned shutdown may also be referred to as scheduled shutdown, controlled shutdown, or graceful shutdown.

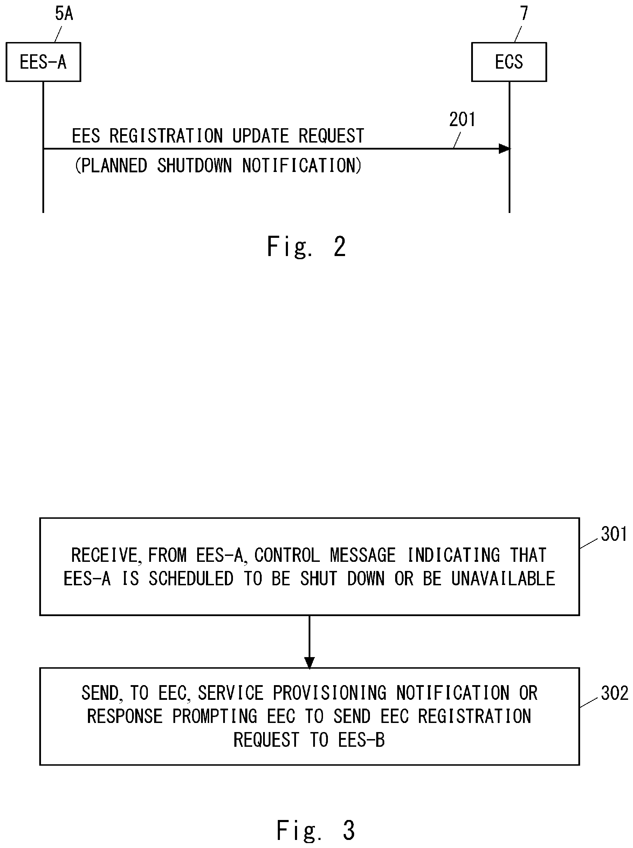

Fig. 2 shows an example of the operation of the EES 5A and the ECS 7 with respect to the planned shutdown of the EES 5A. In step 201, the EES 5A sends a control message to the ECS 7 indicating that the EES 5A is scheduled to be shut down or be unavailable. In other words, the EES 5A notifies the ECS 7 of the planned shutdown before the planned shutdown of the EES 5A is executed.

As shown in Fig. 2, the control message in step 201 may be an EES registration update request. The EES registration update request requests the ECS 7 to update the registration of the EES 5A. The EES registration update procedure allows the EES 5A to update the ECS 7 when the information in the EES 5A changes. In response to updated information (e.g., AC Profile(s) or EES Profile(s)) in the EES 5A, the EES 5A may send an EES registration update request to the ECS 7. Additionally or alternatively, the EES 5A may send an EES registration update request to the ECS 7 to maintain the active registration status before the EES expiration time expires. The expiration time is indicated to the EES 5A by the last EES registration response or EES registration update response. Although not shown in Fig. 2, the ECS 7 may respond to the EES 5A with an EES registration update response. The control message of step 201 may be a message other than the EES registration update request. For example, the control message may be a newly defined message.

The control message of step 201 may include an indication or information to indicate that the EES 5A is scheduled to be shut down or unavailable. This indication or information may be referred to as, for example, but not limited to, a planned, scheduled, controlled, or normal shutdown notification. A planned, scheduled, controlled, or normal shutdown of the EES 5A may be that the EES 5A is disconnected (or deleted) from the EDN 4, or it may be a temporary shutdown or unavailability for any purpose such as routine maintenance. Additionally or alternatively, the control message of step 201 may indicate a grace period until the EES 5A becomes unavailable, or a date and time or period of time when the EES 5A is unavailable. In other words, the planned shutdown indication or notification may be information indicating a grace period until the EES 5A becomes unavailable, or a time and date or period of time when the EES 5A is unavailable. Alternatively, the control message of step 201 may include, in addition to the above indication or information, information indicating a grace period before the EES 5A becomes unavailable, or a date and time or period of time when the EES 5A is unavailable. Additionally or alternatively, the control message of step 201 may contain information or indication to cause the ECS 7 to send a service provisioning notification or response to the EEC 2 to prompt the EEC 2 to send an EEC registration request to an EES other than the EES 5A.

According to the operation of the EES 5A and the ECS 7 described with reference to Fig. 2, the EES 5A notifies the ECS 7 in advance of a planned shutdown of the EES 5A. This allows the ECS 7 to perform any necessary processing or procedures to avoid or mitigate the effects of the planned shutdown of the EES 5A.

In an example, depending on receiving the control message of step 201, the ECS 7 may send a service provisioning notification or response to the EEC 2 of the UE 1 to prompt the EEC 2 to send an EEC registration request to an EES (hereinafter referred to as EES-B or EES 5B) other than the EES 5A. In other words, the control message of step 201 may cause the ECS 7 to send a service provisioning notice or response to the EEC 2, causing the EEC 2 to send an EEC registration request to the EES 5B.

In another example, depending on receiving the control message of step 201, the ECS 7 may send a service provisioning notification or response to the EEC 2 indicating that the EES 5A is scheduled to be shut down or be unavailable. In other words, the control message of step 201 may cause the ECS 7 to send a service provisioning notification or response to the EEC 2 indicating that the EES 5A is scheduled to be shut down or unavailable. This may allow the EEC 2 to take appropriate action, such as successfully deregistering from the EES 5A or requesting another EES (e.g., EES 5B) to perform its EEC registration.

Fig. 3 is a flowchart showing an example of the operation of the ECS 7. Step 301 corresponds to step 201 in Fig. 2. Specifically, the ECS 7 receives a control message from the EES 5A indicating that the EES 5A is scheduled to be shut down or to become unavailable. The control message can be an EES registration update request.

In step 302, depending on the receipt of the control message of step 301, the ECS 7 sends a service provisioning notification or response to the EEC 2 of the UE 1 to prompt the EEC 2 to send an EEC registration request to the EES 5B, which is different from the EES 5A. Specifically, when a service provisioning procedure based on the Subscribe/Notify model is used, the ECS 7 sends a service provisioning notification to the EEC 2. In this case, the ECS 7 may send a service provisioning notification in response to receiving the control message of step 302. That is, the ECS 7 may send the service provisioning notification immediately after receiving the control message in step 302. On the other hand, when a service provisioning procedure based on the Request/Response model is used, the ECS 7 sends a service provisioning response to the EEC 2. In this case, the ECS 7 may send a service provisioning response to the EEC 2 in response to receiving a service provisioning request from the EEC 2 after receiving the control message in step 302. The EEC 2 may send a service provisioning request to the ECS 7 before the expiration time (or lifetime) of the EDN configuration information for the EDN 4 stored in the EEC 2 expires.

In an example, the service provisioning notification or response of step 302 may indicate a list of one or more EESs not including the EES 5A and including the EES 5B. Specifically, the service provisioning notification or response of step 302 may include EDN configuration information for the EDN 4. This EDN configuration information may include a list of one or more EESs not including the EES 5A but including the EES 5B. The EES 5B may serve a service area that at least partially overlaps the service area of the EES 5A that is planned to be shut down. In response to receiving the control message in step 301, the ECS 7 may select the EES 5B as an alternative server to the EES 5A and create an updated list of EESs (not including the EES 5A and including the EES 5B) for the EEC 2 of the UE 1.

The service provisioning notification or response of step 302 causes the EEC 2 already registered with the EES 5A to send an EES registration request to the EES 5B. By sending an EEC registration request from the EEC 2 to the EES 5B, the EES 5B can request the EES 5A to transfer the EEC context for the EEC 2 to the EES 5B. This can be expected to allow the EES 5B to take over the EEC context for the EEC 2 that is managed by the EES 5A before the EES 5A is shut down.

The procedure shown in Fig. 3 is an example and may be modified as appropriate. For example, as already described, the control message of step 301 may indicate a grace period before the EES 5A becomes unavailable or a date and time or period of time when the EES 5A is unavailable. In other words, the control message of step 301 may include information indicating a grace period before the EES 5A becomes unavailable or a date and time or period of time when the EES 5A is unavailable. The ECS 7 may indicate to the EEC 2, via the service provisioning notification or response of step 302, a grace period before the EES 5A becomes unavailable or a date and time or period of time when the EES 5A is unavailable. In other words, the ECS 7 may include information in the service provisioning notification or response of step 302 indicating a grace period until the EES 5A becomes unavailable or a date and time or period of time when EES 5A is unavailable. The ECS 5 may recalculate or update the grace period until the EES 5A becomes unavailable, taking into account the timing of the sending of the service provisioning notification or response. In this case, the EEC 2 may operate to send an EEC registration request to the EES 5B before the EES 5A is shut down. If the EEC 2 cannot send an EEC registration request to the EES 5B before the EES 5A is shut down, the EEC 2 may request an EEC deregistration from the EES 5A. However, it is not necessarily necessary to send the EEC deregistration to the EES 5A. This is because the EEC 2 may no longer be able to successfully communicate with the EES 5A because the EES 5A has been shut down. In addition, this is because the EES 5A will treat the EEC 2 as implicitly deregistered if it does not receive an EEC registration update request from the EEC 2 before the EEC registration expiration time, even if the EES 5A does not receive an explicit EEC deregistration.

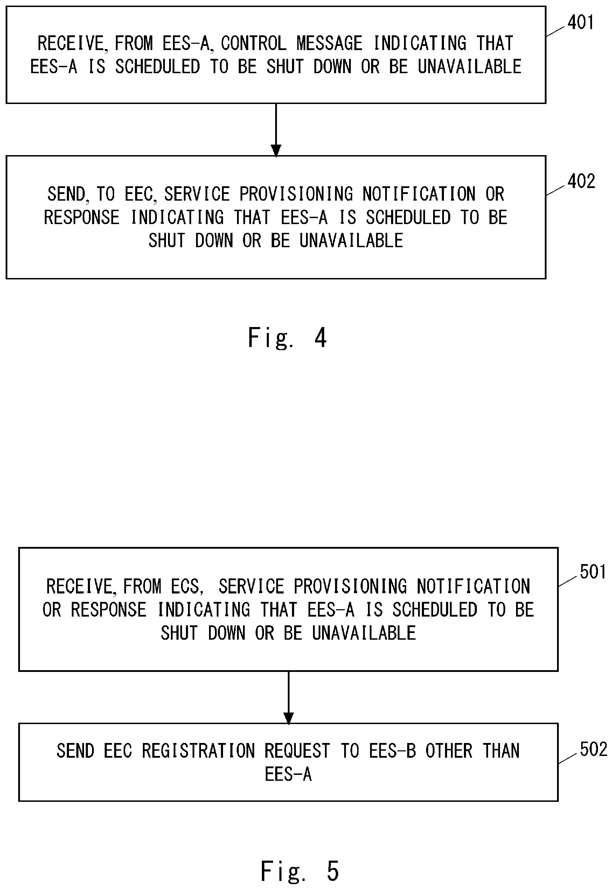

Fig. 4 is a flowchart showing another example of the operation of the ECS 7. Step 401 corresponds to step 201 in Fig. 2. Specifically, the ECS 7 receives a control message from the EES 5A indicating that the EES 5A is scheduled to be shut down or be unavailable. The control message may be an EES registration update request.

In step 402, depending on receiving the control message in step 401, the ECS 7 sends a service provisioning notification or response to the EEC 2 of the UE 1 indicating that the EES 5A is scheduled to be shut down or unavailable. This would allow the EEC 2 already registered with the EES 5A to expect to be notified in advance of the planned shutdown of the EES 5A. The EEC 2 can take appropriate actions, such as successfully deregistering from the EES 5A or requesting another EES (e.g., EES 5B) to perform its EEC registration. In other words, the service provisioning notification or response of step 402 may cause the EEC 2 to send an EEC registration request to an EES (e.g., EES 5B) other than the EES 5A. The service provisioning notification or response of step 402 may cause the EEC 2 to send an EEC deregistration request to the EES 5A that is scheduled to be unavailable. Additionally or alternatively, the service provisioning notification or response of step 402 may cause the EEC 2 to determine whether to send an EEC registration request to the EES 5B or an EEC deregistration request to the EES 5A.

The procedure shown in Fig. 4 is an example and may be modified as appropriate. For example, as already described, the control message of step 401 may indicate a grace period before the EES 5A becomes unavailable or a date and time or period of time when the EES 5A is unavailable. In other words, the control message of step 401 may include information indicating a grace period before the EES 5A becomes unavailable or a date and time or period of time when the EES 5A is unavailable. The ECS 7 may indicate to the EEC 2, via the service provisioning notification or response of step 402, a grace period before the EES 5A becomes unavailable or a date and time or period of time when the EES 5A is unavailable. In other words, the ECS 7 may include information in the service provisioning notification or response of step 402 indicating a grace period until the EES 5A becomes unavailable or a date and time or period of time when EES 5A is unavailable. The ECS 5 may recalculate or update the grace period until the EES 5A becomes unavailable, taking into account the timing of the sending of the service provisioning notification or response. In this case, the EEC 2 may operate to send an EEC registration request to the EES 5B before the EES 5A is shut down. If the EEC 2 cannot send an EEC registration request to the EES 5B before the EES 5A is shut down, the EEC 2 may request an EEC deregistration from the EES 5A. However, as already explained, it is not necessarily necessary to send the EEC deregistration to the EES 5A.

In the procedures of Fig. 3 or Fig. 4, the trigger that causes the ECS 7 to perform step 302 or step 402 is not limited to the control message (or indication or information contained therein) of step 301 or step 401. For example, the ECS 7 may monitor the status of the EES(s) registered with the ECS 7 using a network/server status monitoring method that is independent of the EDGEAPP architecture. In this case, the ECS 7 may perform step 302 or step 402, depending on its determination that EDN information updates, such as changes to the EES, are necessary based on this monitoring.

Fig. 5 is a flowchart showing an example of the operation of the EEC 2. Step 501 corresponds to step 402 in Fig. 4. Specifically, the EEC 2 receives a service provisioning notification or response from the ECS 7 indicating that the EES 5A is scheduled to be shut down or be unavailable. The service provisioning notification or response of step 501 may include an indication or information to indicate that the EES 5A is scheduled to be shut down or unavailable. This indication or information may be referred to as, for example, but not limited to, a planned, scheduled, controlled, or normal shutdown notification. Additionally or alternatively, the service provisioning notification or response of step 501 may indicate a grace period until the EES 5A becomes unavailable, or a date and time or period of time when the EES 5A is unavailable. In other words, the planned shutdown indication or notification may be information indicating a grace period before the EES 5A becomes unavailable, or a date and time or period of time when the EES 5A is unavailable. Alternatively, the service provisioning notification or response of step 501 may include, in addition to the above indication or information, information indicating a grace period before the EES 5A becomes unavailable or a date and time or period of time when the EES 5A is unavailable.

The service provisioning notification or response of step 501 may contain EDN configuration information for the EDN 4 in addition to the planned shutdown indication or notification. This EDN configuration information may include a list of one or more EESs not including the EES 5A, but including the EES 5B. The EES 5B may provide a service area that at least partially overlaps with the service area of the EES 5A that is planned to be shut down or unavailable.

In step 502, the EEC 2 sends an EEC registration request to the EES 5B, which is different from the EES 5A, in response to receiving the service provisioning notification or response in step 501. The EEC registration request includes information for identifying the EEC context for the EEC 2 that is stored in the source EES (i.e., EES 5A). The information may include one or both of an identifier (source EES ID) and endpoint of the source EES (i.e., EES 5A). Additionally or alternatively, the information may include an EEC context ID. The endpoint of the source EES is the endpoint address (e.g., one or both of URI and IP address) of the EES 5A that provided the EEC context. The EEC context ID is the identifier of the EEC context obtained from the previous EEC registration.

By sending an EEC registration request from the EEC 2 to the EES 5B, the EES 5B can request the EES 5A to transfer the EEC context for the EEC 2 to the EES 5B. This can be expected to allow the EES 5B to take over the EEC context for the EEC 2 that is managed by the EES 5A before the EES 5A is shut down.

If the service provisioning notification or response in step 501 indicates a grace period before the EES 5A becomes unavailable, or a time and date or period of time when the EES 5A is unavailable, the EEC 2 may operate to send an EEC registration request to the EES 5B before the EES 5A is shut down. If the EEC 2 cannot send an EEC registration request to the EES 5B before the EES 5A is shut down, the EEC 2 may request an EEC deregistration from the EES 5A. Specifically, the EEC 2 can request an EEC deregistration from the EES 5A at the end of the grace period until the EES 5A is no longer available. However, as already explained, it is not necessarily necessary to send the EEC deregistration to the EES 5A. Alternatively, the EEC 2 may obtain new EDN configuration information from the ECS 7 if it is unable to send an EEC registration request to the EES 5B before the EES 5A is shut down. Specifically, the EEC 2 can send a service provisioning request to the ECS 7 in response to the expiration of the grace period until the EES 5A is no longer available.

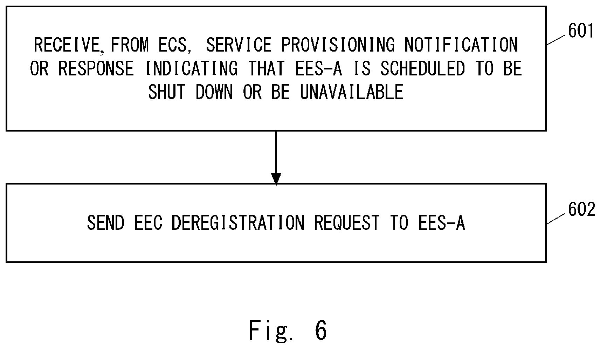

Fig. 6 is a flowchart showing another example of the operation of the EEC 2. Step 601 corresponds to step 402 in Fig. 4. Specifically, the EEC 2 receives a service provisioning notification or response from the ECS 7 indicating that the EES 5A is scheduled to be shut down or be unavailable. The service provisioning notification or response of step 601 may include an indication or information to indicate that the EES 5A is scheduled to be shut down or unavailable. This indication or information may be referred to as, for example, but not limited to, a planned, scheduled, controlled, or normal shutdown notification. Additionally or alternatively, the service provisioning notification or response of step 601 may indicate a grace period until the EES 5A becomes unavailable, or a date and time or period of time when the EES 5A is unavailable. In other words, the planned shutdown indication or notification may be information indicating a grace period before the EES 5A becomes unavailable, or a date and time or period of time when the EES 5A is unavailable. Alternatively, the service provisioning notification or response of step 601 may include, in addition to the above indication or information, information indicating a grace period before the EES 5A becomes unavailable or a date and time or period of time when the EES 5A is unavailable.

The service provisioning notification or response of step 601 may contain EDN configuration information for the EDN 4 in addition to the planned shutdown indication or notification. This EDN configuration information may include a list of one or more EESs not including the EES 5A, but including the EES 5B. The EES 5B may provide a service area that at least partially overlaps with the service area of the EES 5A that is planned to be shut down or unavailable.

In step 602, the EEC2 sends an EEC deregistration request to the EES 5A in response to receiving the service provisioning notification or response in step 601. This allows the EEC2 to expect to be successfully deregistered from the EES 5A that is being shut down. If the service provisioning notification or response in step 601 specifies a grace period until the EES 5A becomes unavailable, or a time and date or period of time when the EES 5A is unavailable, the EEC 2 may operate to send an EEC deregistration request to the EES 5A before the EES 5A is shut down.

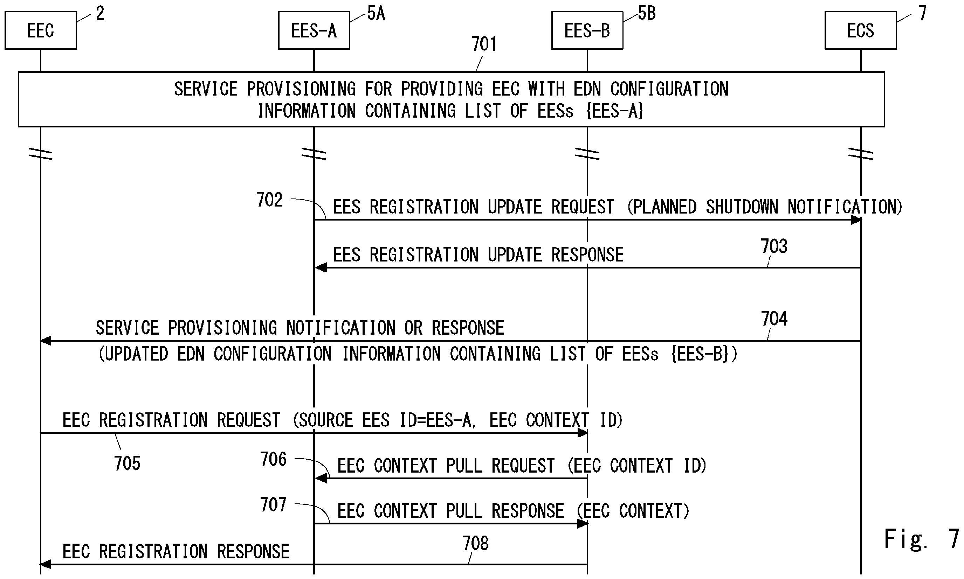

Fig. 7 is a sequence diagram showing an example of the operation of the EEC 2, the EES 5A, the EES 5B, and the ECS 7. Although not explicitly shown in Fig. 7, it is assumed that both the EES 5A and EES 5B have completed their EES registration with the ECS 7. In step 701, the EEC 2 and the ECS 7 perform a service provisioning procedure. The service provisioning procedure may be based on the Subscribe/Notify model or the Request/Response model. The ECS 7 sends a service provisioning notification or response to the EEC 2 containing EDN configuration information for the EDN 4. The EDN configuration information includes a list of EES(s). The EES list includes at least the EES 5A. The EES list may also include the EES 5B.

In step 702, the EES 5A sends an EES registration update request to the ECS 7. The EES registration update request includes an indication or information to indicate that the EES 5A is scheduled to be shut down or be unavailable. This indication or information may be referred to as, for example, but not limited to, a planned, scheduled, controlled, or normal shutdown notification. Additionally or alternatively, the EES registration update request may indicate a grace period until the EES 5A becomes unavailable, or a date and time or period of time when the EES 5A is unavailable. In other words, the planned shutdown indication or notification may be information indicating a grace period before the EES 5A becomes unavailable, or a date and time or period of time when the EES 5A is unavailable. Alternatively, the EES registration update request may include information indicating a grace period before the EES 5A becomes unavailable or a date and time or period of time when the EES 5A is unavailable. In step 703, the ECS7 responds to the EES 5A with an EES registration update response.

In step 704, the ECS 7 sends a service provisioning notification or response to the EEC 2. Specifically, the ECS 7 selects one or more EECs 2 that will be affected by the planned shutdown of the EES 5A. The ECS 7 can select EECs 2 that have already been configured with EES lists, each containing the EES 5A. The ECS 7 then sends a service provisioning notification or response to each of these EECs 2. This service provisioning notification or response contains updated EDN configuration information. The updated EDN configuration information includes a list of one or more EESs not including the EES 5A and including the EES 5B. The EES 5B may provide a service area that overlaps, at least in part, the service area of the EES 5A that is scheduled to be shut down or unavailable.

When a service provisioning procedure based on the Subscribe/Notify model is used, the ECS 7 may send a service provisioning notification to the EEC 2 upon receipt of the EES registration update request in step 702. That is, the ECS 7 may send a service provisioning notification (step 704) to the EEC 2 immediately after receiving the EES registration update request in step 702. Alternatively, when a service provisioning procedure based on the Request/Response model is used, the ECS 7 may send a service provisioning response (step 704) in response to receiving a service provisioning request from the EEC 2 after receiving the EES registration update request in step 702.

The service provisioning notification or response of step 704 may also indicate a grace period until the EES 5A becomes unavailable, or a time and date or period of time when the EES 5A is unavailable. Additionally or alternatively, the service provisioning notification or response of step 704 may include an indication or information indicating that the EES 5A is scheduled to be shut down or be unavailable. This indication or information may be referred to as, for example, but not limited to, a planned, scheduled, controlled, or normal shutdown notification. Additionally or alternatively, the service provisioning notification or response of step 704 may include information or indication to cause the EEC2 to send an EEC registration request to an EES other than the EES 5A.

In step 705, the EEC 2 sends an EEC registration request to the EES 5B, in response to receiving the service provisioning notification or response in step 704. The EEC registration request includes information for identifying the EEC context for the EEC 2 that is stored in the source EES (i.e., EES 5A). The information may include one or both of an identifier (source EES ID) and endpoint of the source EES (i.e., EES 5A). Additionally or alternatively, the information may include an EEC context ID.

The EES 5B detects that the EEC registration request of step 705 contains information for identifying the EEC context for the EEC 2 stored in the source EES. In response, the EES 5B performs an EEC Context Pull relocation procedure. Specifically, in step 706, the EES 5B requests the EEC context from the source EES, i.e., the EES 5A (EEC Context Pull request). The request may include the EEC context ID received from the EEC 2. In step 707, in response to receiving this request from the target EES, i.e., the EES 5B, the EES 5A sends a response (EEC Context Pull response) to the EES 5B containing the EEC context of the EEC 2.

In step 708, the EES 5B responds to the EEC 2 with an EEC registration response.

According to the procedure shown in Fig. 7, the EES 5B is expected to take over the EEC context for the EEC 2 managed by the EES 5A before the EES 5A is shut down.

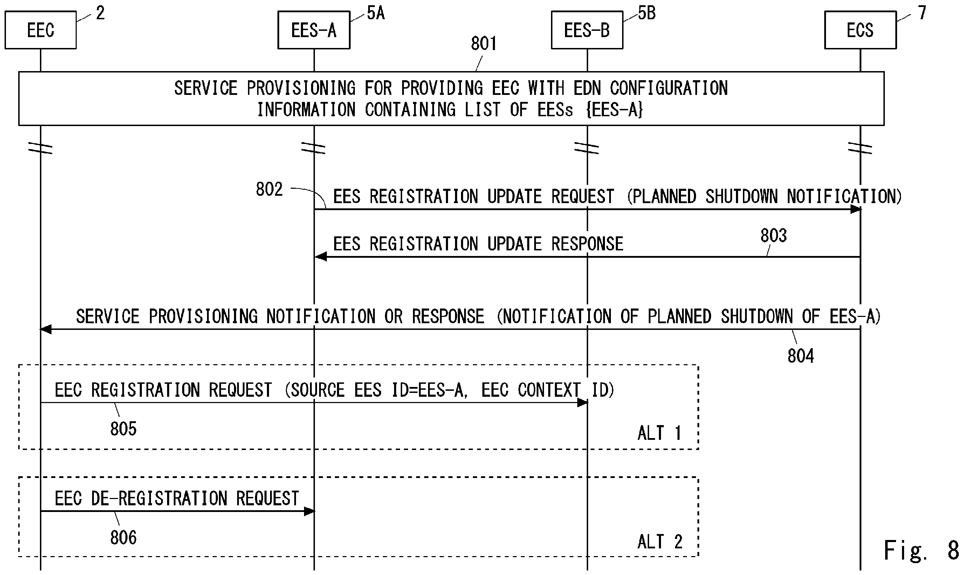

Fig. 8 is a sequence diagram showing another example of the operation of the EEC 2, the EES 5A, the EES 5B, and the ECS 7. Although not explicitly shown in Fig. 8, it is assumed that both the EES 5A and EES 5B have completed their EES registration with the ECS 7. Steps 801 to 803 are similar to steps 701 to 703 in Fig. 7.

In step 804, the ECS 7 sends a service provisioning notification or response to the EEC 2. This service provisioning notification or response may include an indication or information for indicating that the EES 5A is scheduled to be shut down or unavailable. This indication or information may be referred to as, for example, but not limited to, a planned, scheduled, controlled, or normal shutdown notification. Additionally or alternatively, the service provisioning notice or response may indicate a grace period until the EES 5A becomes unavailable, or a date and time or period of time when the EES 5A is unavailable.

The service provisioning notification or response of step 804 may further include updated EDN configuration information. The updated EDN configuration information includes a list of one or more EESs not including the EES 5A and including the EES 5B. The EES 5B may provide a service area that overlaps, at least in part, the service area of the EES 5A that is scheduled to be shut down or unavailable.

Depending on the receipt of the service provisioning notification or response, the EEC 2 of the UE 1 performs one or both of Alternative Method 1 (Alternative 1) and Alternative Method 2 (Alternative 2). For example, the EEC 2 may choose Alternative 1 if it determines that the EEC context transfer (or EEC context generation in the target EES (e.g., EES 5B)) is required. Otherwise, the EEC 2 may choose Alternative 2. In Alternative 1, the EEC 2 sends an EEC registration request to the EES 5B (step 805). The EEC registration request includes information for identifying the EEC context for the EEC 2 that is stored in the source EES (i.e., EES 5A). The information may include one or both of an identifier (source EES ID) and endpoint of the source EES (i.e., EES 5A). Additionally or alternatively, the information may include an EEC context ID. The EEC registration request causes the EES 5B to receive the EEC context from the EES 5A. This can be expected to allow the EES 5B to take over the EEC context for the EEC 2 that is managed by the EES 5A before the EES 5A is shut down.

In Alternative 2, the EEC 2 sends an EEC deregistration request to the EES 5A (step 806). This is expected to successfully deregister the EEC 2 from the EES 5A, which is being shut down. Alternatively, the EEC 2 may delete (or locally release) the EEC Context information held within the EEC 2 without sending an EEC deregistration request to the EES 5A.

### Second Example Embodiment

An example of a network architecture for this embodiment is identical to the example described with reference to Fig. 1. This example embodiment provides details on the operation of the EEC 2 and the EES 5 with respect to planned shutdown of the EES 5 (hereafter referred to as EES-A or EES 5A). Planned shutdown may also be referred to as scheduled shutdown, controlled shutdown, or graceful shutdown.

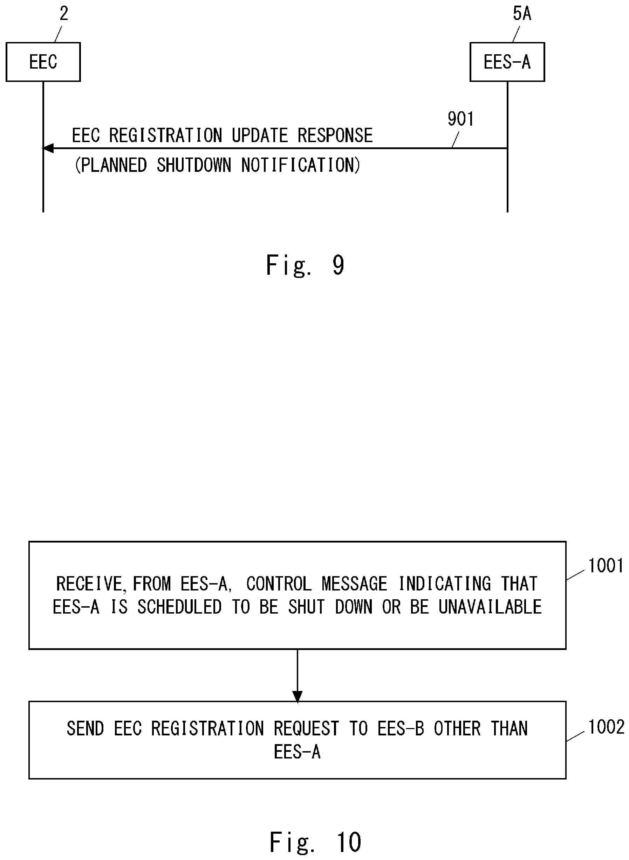

Fig. 9 shows an example of the operation of the EEC 2 and the EES 5A with respect to the planned shutdown of the EES 5A. In step 9901, the EES 5A sends a control message to the EEC 2 indicating that the EES 5A is scheduled to be shut down or be unavailable. In other words, the EES 5A notifies the EEC 2 of the planned shutdown before the planned shutdown of the EES 5A is executed.

As shown in Fig. 9, the control message of step 901 may be an EEC registration update response. In this case, the EES 5A sends an EEC registration update response in response to receiving an EEC registration update request from the EEC 2. The EEC registration update request requests the EES 5A to update the registration of the EEC 2. The EEC registration update procedure allows the EEC 2 to update the EES 5A when the information in the EEC 2 changes. In response to updated information (e.g., AC Profile(s)) in the EEC 2, the EEC 2 may send an EEC registration update request to the EES 5A. Additionally or alternatively, the EEC 2 may send an EEC registration update request to the EES 5A to maintain the active registration status before the EEC registration expiration time expires. The expiration time is indicated to the EEC 2 by the last EEC registration response or EEC registration update response. Although not shown in Fig. 9, the EES 5A may respond to the EES 5A with an EEC registration update response.

The control message of step 901 may be a message other than the EEC registration update response. For example, the control message may be an EEC registration response, an EEC deregistration response, an edge application server (EAS) discovery response, or an EAS discovery notification. Alternatively, the control message may be a newly defined message. For example, this message may be a network-initiated EEC deregistration request.

The control message of step 901 may include an indication or information for indicating that the EES 5A is scheduled to be shut down or be unavailable. This indication or information may be referred to as, for example, but not limited to, a planned, scheduled, controlled, or normal shutdown notification. Additionally or alternatively, the control message may indicate a grace period until the EES 5A becomes unavailable, or a date and time or period of time when the EES 5A is unavailable. Additionally or alternatively, the control message of step 901 may include information or indication to prompt the EEC2 to send an EEC registration request to an EES other than the EES 5A.

According to the operation of the EEC 2 and the EES 5A described with reference to Fig. 9, the EES 5A notifies the EEC 2 in advance of the planned shutdown of the EES 5A. This allows the EEC 2 to perform any necessary processing or procedures to avoid or mitigate the effects of the planned shutdown of the EES 5A.

In an example, depending on the receipt of the control message of step 901, the EEC 2 may send an EEC registration request to an EES other than the EES 5A (hereinafter referred to as EES-B or EES 5B). In other words, the control message of step 901 may cause the EEC 2 to send an EEC registration request to the EES 5B. By sending an EEC registration request from the EEC 2 to the EES 5B, the EES 5B can request the EES 5A to transfer the EEC context for the EEC 2 to the EES 5B.

In another example, depending on the receipt of the control message of step 901, the EEC 2 may send an EEC deregistration request to the EES 5A. In other words, the control message of step 901 may cause the EEC 2 to send an EEC deregistration request to the EES 5A. This may allow the EEC 2 to successfully deregister from the EES 5A, which is being shut down.

In yet another example, based on the control message of step 901, the EEC 2 may decide whether to send an EEC registration request to the EES 5B or an EEC deregistration request to the EES 5A. In other words, the control message of step 901 may cause the EEC 2 to determine whether to send an EEC registration request to the EES 5B or an EEC deregistration request to the EES 5A.

Fig. 10 is a flowchart showing an example of the operation of the EEC 2. Step 1001 corresponds to step 901 in Fig. 9. Specifically, the EEC 2 receives a control message from the EES 5A indicating that the EES 5A is scheduled to be shut down or be unavailable. The control message of step 1001 may include an indication or information for indicating that the EES 5A is scheduled to be shut down or unavailable. This indication or information may be referred to as, for example, but not limited to, a planned, scheduled, controlled, or normal shutdown notification. Additionally or alternatively, the control message of step 1001 may indicate a grace period until the EES 5A becomes unavailable, or a date and time or period of time when the EES 5A is unavailable. In other words, the indication or notification of the planned shutdown may be information indicating a grace period until the EES 5A becomes unavailable, or the date and time or period of time when the EES 5A is unavailable.

In step 1002, the EEC 2 sends an EEC registration request to the EES 5B, which is different from the EES 5A, in response to receiving the service provisioning notification or response in step 1001. The EEC registration request includes information for identifying the EEC context for the EEC 2 that is stored in the source EES (i.e., EES 5A). The information may include one or both of an identifier (source EES ID) and endpoint of the source EES (i.e., EES 5A). Additionally or alternatively, the information may include an EEC context ID. The endpoint of the source EES is the endpoint address (e.g., one or both of URI and IP address) of the EES 5A that provided the EEC context. The EEC context ID is the identifier of the EEC context obtained from the previous EEC registration.

By sending an EEC registration request from the EEC 2 to the EES 5B, the EES 5B can request the EES 5A to transfer the EEC context for the EEC 2 to the EES 5B. This can be expected to allow the EES 5B to take over the EEC context for the EEC 2 that is managed by the EES 5A before the EES 5A is shut down.

If the control message of step 1001 indicates a grace period before the EES 5A becomes unavailable, or a time and date or period of time when the EES 5A is unavailable, the EEC 2 may operate to send an EEC registration request to the EES 5B before the EES 5A is shut down. If the EEC 2 cannot send an EEC registration request to the EES 5B before the EES 5A is shut down, the EEC 2 may request an EEC deregistration from the EES 5A. Specifically, the EEC 2 can request an EEC deregistration from the EES 5A at the end of the grace period until the EES 5A is no longer available. However, as already explained, it is not necessarily necessary to send the EEC deregistration to the EES 5A. Alternatively, the EEC 2 may obtain new EDN configuration information from the ECS 7 if it is unable to send an EEC registration request to the EES 5B before the EES 5A is shut down. Specifically, the EEC 2 can send a service provisioning request to the ECS 7 in response to the expiration of the grace period until the EES 5A is no longer available.

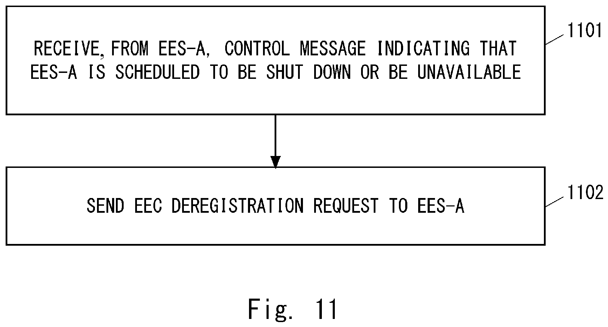

Fig. 11 is a flowchart showing another example of the operation of the EEC 2. Step 1101 corresponds to step 901 in Fig. 9. Specifically, the EEC 2 receives a control message from the EES 5A indicating that the EES 5A is scheduled to be shut down or be unavailable. The control message of step 1101 may include an indication or information to indicate that the EES 5A is scheduled to be shut down or unavailable. This indication or information may be referred to as, for example, but not limited to, a planned, scheduled, controlled, or normal shutdown notification. Additionally or alternatively, the control message of step 1101 may indicate a grace period until the EES 5A becomes unavailable, or a date and time or period of time when the EES 5A is unavailable. In other words, the planned shutdown indication or notification may be information indicating a grace period before the EES 5A becomes unavailable, or a date and time or period of time when the EES 5A is unavailable.

In step 1102, the EEC2 sends an EEC deregistration request to the EES 5A in response to receiving the control message in step 1101. This allows the EEC2 to expect to be successfully deregistered from the EES 5A that is being shut down. If the service provisioning notification or response in step 1101 specifies a grace period until the EES 5A becomes unavailable, or a time and date or period of time when the EES 5A is unavailable, the EEC 2 may operate to send an EEC deregistration request to the EES 5A before the EES 5A is shut down.

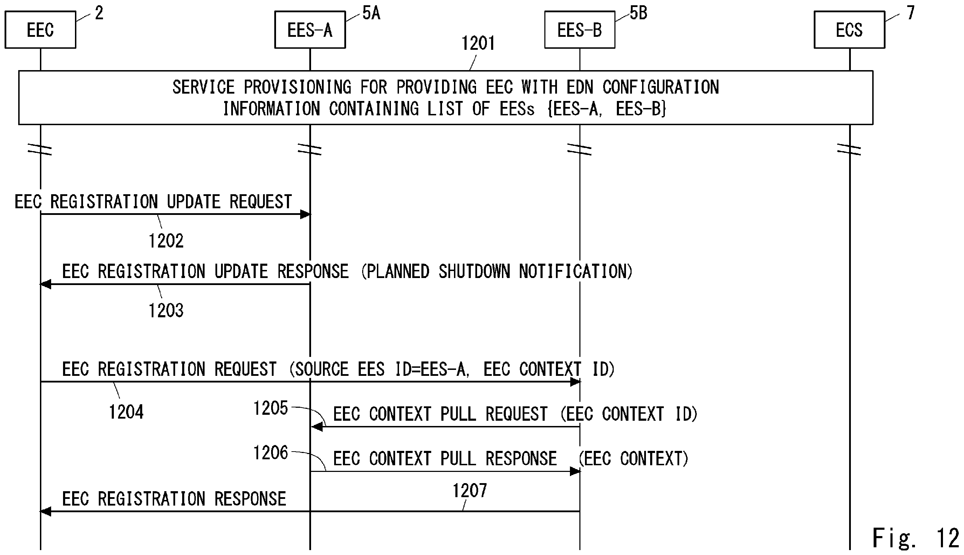

Fig. 12 is a sequence diagram showing an example of the operation of the EEC 2, the EES 5A, the EES 5B, and the ECS 7. Although not explicitly shown in Fig. 12, it is assumed that both the EES 5A and EES 5B have completed their EES registration with the ECS 7. In step 1201, the EEC 2 and the ECS 7 perform a service provisioning procedure. The service provisioning procedure may be based on the Subscribe/Notify model or the Request/Response model. The ECS 7 sends a service provisioning notification or response to the EEC 2 containing EDN configuration information for the EDN 4. The EDN configuration information includes a list of EES(s). The EES list includes at least the EES 5A and the EES 5B. The EES 5B may provide a service area that overlaps, at least in part, the service area of the EES 5A that is scheduled to be shut down or unavailable.

In step 1202, the EEC 2 sends an EEC registration update request to the EES 5A. In step 1203, the EES 5A responds to the EEC 2 with an EEC registration update response. The EEC registration update response includes an indication or information for indicating that the EES 5A is scheduled to be shut down or be unavailable. This indication or information may be referred to as, for example, but not limited to, a planned, scheduled, controlled, or normal shutdown notification. Additionally or alternatively, the EEC registration update response may indicate a grace period until the EES 5A becomes unavailable, or a date and time or period of time when the EES 5A is unavailable. In other words, the planned shutdown indication or notification may be information indicating a grace period before the EES 5A becomes unavailable, or a date and time or period of time when the EES 5A is unavailable.

The messages of steps 1202 and 1203 are not limited to the EEC registration update request and EEC registration update response. For example, they may be an EEC registration request and EEC registration response, an EEC deregistration request and EEC deregistration response, or an EAS discovery request and EAS discovery response.

In step 1204, the EEC 2 sends an EEC registration request to the EES 5B in response to receiving the EEC registration update response (or other control message) of step 1203. The EEC registration request includes information for identifying the EEC context for the EEC 2 that is stored in the source EES (i.e., EES 5A). The information may include one or both of an identifier (source EES ID) and endpoint of the source EES (i.e., EES 5A). Additionally or alternatively, the information may include an EEC context ID.

The EES 5B detects that the EEC registration request of step 1204 contains information for identifying the EEC context for the EEC 2 stored in the source EES. In response, the EES 5B performs an EEC Context Pull relocation procedure. Specifically, in step 1205, the EES 5B requests the EEC context from the source EES, i.e., the EES 5A (EEC Context Pull request). The request may include the EEC context ID received from the EEC 2. In step 1206, in response to receiving this request from the target EES, i.e., the EES 5B, the EES 5A sends a response (EEC Context Pull response) to the EES 5B containing the EEC context of the EEC 2.

In step 1207, the EES 5B responds to the EEC 2 with an EEC registration response.

According to the procedure shown in Fig. 12, the EES 5B is expected to take over the EEC context for the EEC 2 managed by the EES 5A before the EES 5A is shut down.

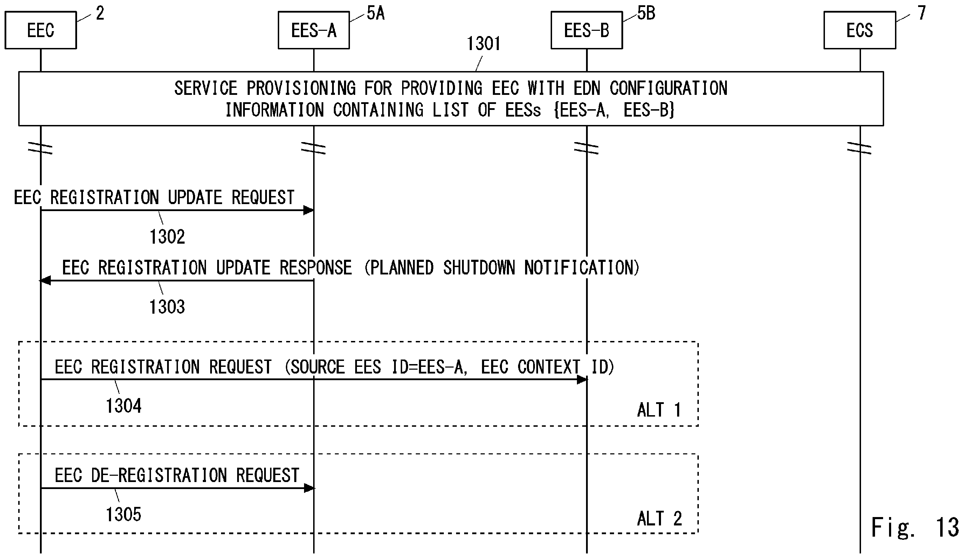

Fig. 13 is a sequence diagram showing another example of the operation of the EEC 2, the EES 5A, the EES 5B, and the ECS 7. Although not explicitly shown in Fig. 13, it is assumed that both the EES 5A and EES 5B have completed their EES registration with the ECS 7. Steps 1301 to 1303 are similar to steps 1201 to 1203 in Fig. 12.

Depending on the receipt of the EEC registration update response (or other control message) in step 1303, the EEC 2 of the UE 1 performs one or both of Alternative Method 1 (Alternative 1) and Alternative Method 2 (Alternative 2). For example, the EEC 2 may choose Alternative 1 if it determines that the EEC context transfer (or EEC context generation in the target EES (e.g., EES 5B)) is required. Otherwise, the EEC 2 may choose Alternative 2. In Alternative 1, the EEC 2 sends an EEC registration request to the EES 5B (step 1304). The EEC registration request includes information for identifying the EEC context for the EEC 2 that is stored in the source EES (i.e., EES 5A). The information may include one or both of an identifier (source EES ID) and endpoint of the source EES (i.e., EES 5A). Additionally or alternatively, the information may include an EEC context ID. The EEC registration request causes the EES 5B to receive the EEC context from the EES 5A. This can be expected to allow the EES 5B to take over the EEC context for the EEC 2 that is managed by the EES 5A before the EES 5A is shut down.

In Alternative 2, the EEC 2 sends an EEC deregistration request to the EES 5A (step 1305). This is expected to successfully deregister the EEC 2 from the EES 5A, which is being shut down. Alternatively, the EEC 2 may delete (or locally release) the EEC Context information held within the EEC 2 without sending an EEC deregistration request to the EES 5A.

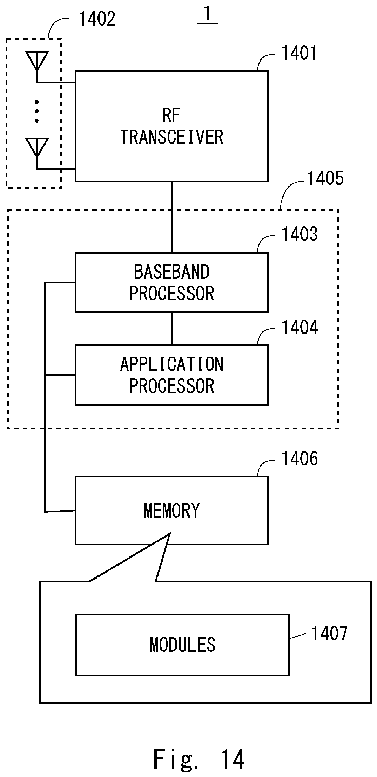

The following provides configuration examples of the UE 1, EES 5, EAS 6, ECS 7, and EES 51 according to the above-described example embodiments. Fig. 14 is a block diagram showing an example configuration of the UE 1. A Radio Frequency (RF) transceiver 1401 performs analog RF signal processing to communicate with RAN nodes. The RF transceiver 1401 may include a plurality of transceivers. The analog RF signal processing performed by the RF transceiver 1401 includes frequency up-conversion, frequency down-conversion, and amplification. The RF transceiver 1401 is coupled to an antenna array 1402 and a baseband processor 1403. The RF transceiver 1401 receives modulated symbol data (or OFDM symbol data) from the baseband processor 1403, generates a transmission RF signal, and supplies the transmission RF signal to the antenna array 1402. Further, the RF transceiver 1401 generates a baseband reception signal based on a reception RF signal received by the antenna array 1402 and supplies the baseband reception signal to the baseband processor 1403. The RF transceiver 1401 may include an analog beamformer circuit for beam forming. The analog beamformer circuit includes, for example, a plurality of phase shifters and a plurality of power amplifiers.

The baseband processor 1403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame) (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1403 may include, for example, signal processing of Service Data Adaptation Protocol (SDAP), Packet Data Convergence Protocol (PDCP), Radio Link Control (RLC), Medium Access Control (MAC), and Physical (PHY) layers. The control-plane processing performed by the baseband processor 1403 may include processing of Non-Access Stratum (NAS) protocols, Radio Resource Control (RRC) protocols, MAC Control Elements (CEs), and Downlink Control Information (DCIs).

The baseband processor 1403 may perform Multiple Input Multiple Output (MIMO) encoding and pre-coding for beam forming.

The baseband processor 1403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1404 described below.

The application processor 1404 is also referred to as a CPU, an MPU, a microprocessor, or a processor core. The application processor 1404 may include a plurality of processors (or processor cores). The application processor 1404 loads a system software program (Operating System (OS)) and various application programs (e.g., a call application, a WEB browser, a mailer, a camera operation application, and a music player application) from a memory 1406 or from another memory not shown and executes these programs, thereby providing various functions of the UE 1.

In some implementations, as represented by a dashed line (1405) in Fig. 14, the baseband processor 1403 and the application processor 1404 may be integrated on a single chip. In other words, the baseband processor 1403 and the application processor 1404 may be implemented in a single System on Chip (SoC) device 1405. The SoC device may be referred to as a Large-Scale Integration (LSI) or a chipset.

The memory 1406 is a volatile memory, a non-volatile memory, or a combination thereof. The memory 1406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1406 may include, for example, an external memory device that can be accessed from the baseband processor 1403, the application processor 1404, and the SoC 1405. The memory 1406 may include an internal memory device that is integrated in the baseband processor 1403, the application processor 1404, or the SoC 1405. Further, the memory 1406 may include a memory in a Universal Integrated Circuit Card (UICC).

The memory 1406 may store one or more software modules (computer programs) 1407 including instructions and data to perform the processing by the UE 1 described in the above example embodiments. In some implementations, the baseband processor 1403 or the application processor 1404 may load these software modules 1407 from the memory 1406 and execute the loaded software modules, thereby performing the processing of the UE 1 described in the above example embodiments with reference to the drawings.

The control-plane processing and operations performed by the UE 1 described in the above example embodiments can be realized by elements other than the RF transceiver 1401 and the antenna array 1402, i.e., realized by one or both of the baseband processor 1403 and the application processor 1404 and the memory 1406 storing the software modules 1407.

The operations performed by the EEC 2 and the AC(s) 3 of the UE 1 described in the above example embodiments can be realized by one or both of the baseband processor 1403 and the application processor 1404 and the memory 1406 storing the software modules 1407.

Fig. 14 shows an example configuration of the EES 5 (EES 5A, EES 5B). The EAS 6 and the ECS 7 may also have the configuration as shown in Fig. 14. Referring to Fig. 14, the EES 5 (or EAS 6, or ECS 7) includes a network interface 1501, a processor 1502, and a memory 1503. The network interface 1501 is used to communicate with other network functions (NFs) or nodes. The network interface 1501 may include, for example, a network interface card (NIC) conforming to the IEEE 802.3 series.

The processor 1502 may be, for example, a microprocessor, a Micro Processing Unit (MPU), or a Central Processing Unit (CPU). The processor 1502 may include a plurality of processors.

The memory 1503 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1503 may include a storage located apart from the processor 1502. In this case, the processor 1502 may access the memory 1503 via the network interface 1501 or an I/O interface not shown.

The memory 1503 may store one or more software modules (computer programs) 1504 including instructions and data to perform the processing of the EES 5 (or EAS 6, or ECS 7) described in the above example embodiments. In some implementations, the processor 1502 may be configured to load the one or more software modules 1504 from the memory 1503 and execute the loaded software modules, thereby performing the processing of the EES 5 (or EAS 6, or ECS 7) described in the above example embodiments.

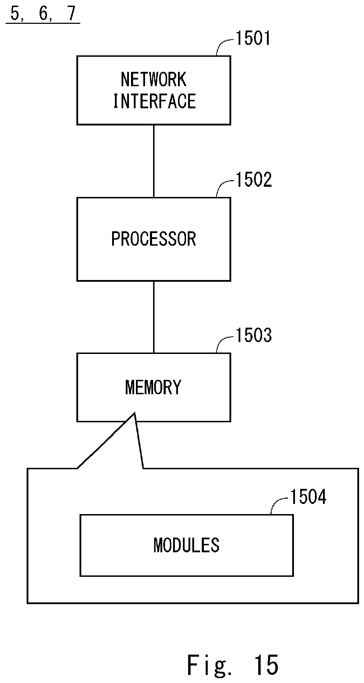

As described using Figs. 14 and 15, each of the processors in the UE 1, EES 5, EAS 6, and ECS 7 according to the example embodiments described above can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustical, or other form of propagated signals.

The above-described example embodiments are merely examples of applications of the technical ideas obtained by the inventors. These technical ideas are not limited to the above-described example embodiments and various modifications can be made thereto.

For example, the whole or part of the example embodiments disclosed above can be described as, but not limited to, the following supplementary notes.

### (Supplementary Note 1)

A first edge enabler server (EES) comprising:
a memory; and
at least one processor coupled to the memory and configured to send a control message to an edge configuration server indicating that the first EES is scheduled to be shut down or be unavailable.

### (Supplementary Note 2)

The first EES according to Supplementary Note 1, wherein the control message causes the edge configuration server to send a service provisioning notification or response to a User Equipment (UE) prompting the UE to send an edge enabler client (EEC) registration request to a second EES different from the first EES.

### (Supplementary Note 3)

The first EES according to Supplementary Note 1 or 2, wherein the control message causes the edge configuration server to send a service provisioning notification or response to a User Equipment (UE) indicating that the first EES is scheduled to be shut down or be unavailable.

### (Supplementary Note 4)

The first EES according to any one of Supplementary Notes 1 to 3, wherein the control message is an EES registration update request that requests the edge configuration server to update a registration of the first EES.

### (Supplementary Note 5)

The first EES according to any one of Supplementary Notes 1 to 4, wherein the control message indicates a grace period until the first EES becomes unavailable, or a date and time or period of time when the first EES is unavailable.

### (Supplementary Note 6)

A method performed by a first edge enabler server (EES), the method comprising:
sending a control message to an edge configuration server indicating that the first EES is scheduled to be shut down or be unavailable.

### (Supplementary Note 7)

A program for causing a computer to perform a method for a first edge enabler server (EES),
the method comprising sending a control message to an edge configuration server indicating that the first EES is scheduled to be shut down or be unavailable.

### (Supplementary Note 8)

A first edge enabler server (EES) comprising:
a memory; and
at least one processor coupled to the memory and configured to send a control message to a User Equipment (UE) indicating that the first EES is scheduled to be shut down or be unavailable.

### (Supplementary Note 9)

The first EES according to Supplementary Note 8, wherein the control message causes the UE to send an edge enabler client (EEC) registration request to a second EES different from the first EES.

### (Supplementary Note 10)

The first EES according to Supplementary Note 8, wherein the control message causes the UE to send an edge enabler client (EEC) deregistration request to the first EES.

### (Supplementary Note 11)

The first EES according to Supplementary Note 8, wherein the control message causes the UE to determine whether to send an edge enabler client (EEC) registration request to a second EES or an EEC deregistration request to the first EES.

### (Supplementary Note 12)

The first EES according to any one of Supplementary Notes 8 to 11, wherein the control message indicates a grace period until the first EES becomes unavailable, or a date and time or period of time when the first EES is unavailable.

### (Supplementary Note 13)

The first EES according to any one of Supplementary Notes 8 to 12, wherein the control message is an edge enabler client (EEC) registration update response, an EEC registration response, an EEC deregistration response, an edge application server (EAS) discovery response, or an EAS discovery notification.

### (Supplementary Note 14)

A method performed by a first edge enabler server (EES), the method comprising:
sending a control message to a User Equipment (UE) indicating that the first EES is scheduled to be shut down or be unavailable.

### (Supplementary Note 15)

A program for causing a computer to perform a method for a first edge enabler server (EES),
the method comprising sending a control message to a User Equipment (UE) indicating that the first EES is scheduled to be shut down or be unavailable.

### (Supplementary Note 16)

An edge configuration server comprising:
a memory; and
at least one processor coupled to the memory and configured to:
   receive a control message from a first edge enabler server (EES) indicating that the first EES is scheduled to be shut down or be unavailable; and
   depending on receiving the control message, send a service provisioning notification or response to a User Equipment (UE) prompting the UE to send an Edge Enabler Client (EEC) registration request to a second EES different from the first EES.

### (Supplementary Note 17)

The edge configuration server according to Supplementary Note 16, wherein the service provisioning notification or response indicates a list of one or more EESs not including the first EES and including the second EES.

### (Supplementary Note 18)

The edge configuration server according to Supplementary Note 16 or 17, wherein the second EES serves a service area that at least partially overlaps a service area served by the first EES.

### (Supplementary Note 19)

The edge configuration server according to any one of Supplementary Notes 16 to 18, wherein the at least one processor is configured to select the second EES as an alternative server to the first EES in response to receiving the control message.

### (Supplementary Note 20)

The edge configuration server according to any one of Supplementary Notes 16 to 19, wherein the control message is an EES registration update request that requests the edge configuration server to update a registration of the first EES.

### (Supplementary Note 21)

The edge configuration server according to any one of Supplementary Notes 16 to 20, wherein the control message and the service provisioning notification or response each indicate a grace period until the first EES becomes unavailable, or a date and time or period of time when the first EES is unavailable.

### (Supplementary Note 22)

A method performed by an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) prompting the UE to send an Edge Enabler Client (EEC) registration request to a second EES different from the first EES.

### (Supplementary Note 23)

A program for causing a computer to perform a method for an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) prompting the UE to send an Edge Enabler Client (EEC) registration request to a second EES different from the first EES.

### (Supplementary Note 24)

An edge configuration server comprising:
a memory; and
at least one processor coupled to the memory and configured to:
   receive a control message from a first edge enabler server (EES) indicating that the first EES is scheduled to be shut down or be unavailable; and
   depending on receiving the control message, send a service provisioning notification or response to a User Equipment (UE) indicating that the first EES is scheduled to be shut down or be unavailable.

### (Supplementary Note 25)

The edge configuration server according to Supplementary Note 24, wherein the service provisioning notification or response causes the UE to send an edge enabler client (EEC) registration request to a second EES different from the first EES.

### (Supplementary Note 26)

The edge configuration server according to Supplementary Note 24, wherein the service provisioning notification or response causes the UE to send an edge enabler client (EEC) deregistration request to the first EES.

### (Supplementary Note 27)

The edge configuration server according to Supplementary Note 24, wherein the service provisioning notification or response causes the UE to determine whether to send an edge enabler client (EEC) registration request to a second EES or an EEC deregistration request to the first EES.

### (Supplementary Note 28)

The edge configuration server according to any one of Supplementary Notes 24 to 27, wherein the control message is an EES registration request that requests the edge configuration server to update a registration of the first EES.

### (Supplementary Note 29)

The edge configuration server according to any one of Supplementary Notes 24 to 28, wherein the control message and the service provisioning notification or response each indicate a grace period until the first EES becomes unavailable, or a date and time or period of time when the first EES is unavailable.

### (Supplementary Note 30)

A method performed by an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) indicating that the first EES is scheduled to be shut down or be unavailable.

### (Supplementary Note 31)

A program for causing a computer to perform a method for an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) indicating that the first EES is scheduled to be shut down or be unavailable.

### (Supplementary Note 32)

A User Equipment (UE) comprising:
a memory; and
at least one processor coupled to the memory and configured to:
   receive a control message from a first edge enabler server (EES) or an edge configuration server indicating that the first EES is scheduled to be shut down or be unavailable; and
   depending on receiving the control message, send an edge enabler client (EEC) registration request to a second EES different from the first EES.

### (Supplementary Note 33)

The UE according to Supplementary Note 32, wherein the at least one processor is configured to determine, based on the control message, whether to send the EEC registration request to the second EES or an EEC deregistration request to the first EES.

### (Supplementary Note 34)

The UE according to Supplementary Note 32 or 33, wherein the control message indicates a grace period until the first EES becomes unavailable, or a date and time or period of time when the first EES is unavailable.

### (Supplementary Note 35)

The UE according to any one of Supplementary Notes 32 to 34, wherein the control message is a service provisioning notification or response sent by the edge configuration server.

### (Supplementary Note 36)

The UE according to any one of Supplementary Notes 32 to 34, wherein the control message is sent by the first EES.

### (Supplementary Note 37)

The UE according to Supplementary Note 36, wherein the control message is an edge enabler client (EEC) registration update response, an EEC registration response, an EEC deregistration response, an edge application server (EAS) discovery response, or an EAS discovery notification.

### (Supplementary Note 38)

A method performed by a User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) registration request to a second EES different from the first EES.

### (Supplementary Note 39)

A program for causing a computer to perform a method for User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) registration request to a second EES different from the first EES.

### (Supplementary Note 40)

A User Equipment (UE) comprising:
a memory; and
at least one processor coupled to the memory and configured to:
   receive a control message from a first edge enabler server (EES) or an edge configuration server indicating that the first EES is scheduled to be shut down or be unavailable; and
   depending on receiving the control message, send an edge enabler client (EEC) deregistration request to the first EES.

### (Supplementary Note 41)

The UE according to Supplementary Note 40, wherein the at least one processor is configured to determine, based on the control message, whether to send an EEC registration request to a second EES different from the first EES or the EEC deregistration request to the first EES.

### (Supplementary Note 42)

The UE according to Supplementary Note 40 or 41, wherein the control message indicates a grace period until the first EES becomes unavailable, or a date and time or period of time when the first EES is unavailable.

### (Supplementary Note 43)

The UE according to any one of Supplementary Notes 40 to 42, wherein the control message is a service provisioning notification or response sent by the edge configuration server.

### (Supplementary Note 44)

The UE according to any one of Supplementary Notes 40 to 42, wherein the control message is sent by the first EES.

### (Supplementary Note 45)

The UE according to Supplementary Note 44, wherein the control message is an edge enabler client (EEC) registration update response, an EEC registration response, an EEC deregistration response, an edge application server (EAS) discovery response, or an EAS discovery notification.

### (Supplementary Note 46)

A method performed by a User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) deregistration request to the first EES.

### (Supplementary Note 47)

A program for causing a computer to perform a method for User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) deregistration request to the first EES.

This application is based upon and claims the benefit of priority from Japanese Patent Application No. 2021-132616, filed on August 17, 2021, the disclosure of which is incorporated herein in its entirety by reference.

### Reference Signs List

- 1: User Equipment (UE)
- 2: Edge Enabler Client (EEC)
- 3: Application client (AC)
- 4: Edge Data Network (EDN)
- 5, 5A, 5B: Edge Enabler Server (EES)
- 6: Edge Application Server (EAS)
- 7: Edge Configuration Server (ECS)
- 1403: Baseband Processor
- 1404: Application Processor
- 1406: Memory
- 1407: Modules
- 1502: Processor
- 1503: Memory
- 1504: Modules

## Claims

1. A first edge enabler server (EES) comprising:
a memory; and
at least one processor coupled to the memory and configured to send a control message to an edge configuration server indicating that the first EES is scheduled to be shut down or be unavailable.

2. The first EES according to claim 1, wherein the control message causes the edge configuration server to send a service provisioning notification or response to a User Equipment (UE) prompting the UE to send an edge enabler client (EEC) registration request to a second EES different from the first EES.

3. The first EES according to claim 1 or 2, wherein the control message causes the edge configuration server to send a service provisioning notification or response to a User Equipment (UE) indicating that the first EES is scheduled to be shut down or be unavailable.

4. The first EES according to any one of claims 1 to 3, wherein the control message is an EES registration update request that requests the edge configuration server to update a registration of the first EES.

5. The first EES according to any one of claims 1 to 4, wherein the control message indicates a grace period until the first EES becomes unavailable, or a date and time or period of time when the first EES is unavailable.

6. A method performed by a first edge enabler server (EES), the method comprising:
sending a control message to an edge configuration server indicating that the first EES is scheduled to be shut down or be unavailable.

7. A non-transitory computer readable medium storing a program for causing a computer to perform a method for a first edge enabler server (EES),
the method comprising sending a control message to an edge configuration server indicating that the first EES is scheduled to be shut down or be unavailable.

8. A first edge enabler server (EES) comprising:
a memory; and
at least one processor coupled to the memory and configured to send a control message to a User Equipment (UE) indicating that the first EES is scheduled to be shut down or be unavailable.

9. The first EES according to claim 8, wherein the control message causes the UE to send an edge enabler client (EEC) registration request to a second EES different from the first EES.

10. The first EES according to claim 8, wherein the control message causes the UE to send an edge enabler client (EEC) deregistration request to the first EES.

11. The first EES according to claim 8, wherein the control message causes the UE to determine whether to send an edge enabler client (EEC) registration request to a second EES or an EEC deregistration request to the first EES.

12. The first EES according to any one of claims 8 to 11, wherein the control message indicates a grace period until the first EES becomes unavailable, or a date and time or period of time when the first EES is unavailable.

13. The first EES according to any one of claims 8 to 12, wherein the control message is an edge enabler client (EEC) registration update response, an EEC registration response, an EEC deregistration response, an edge application server (EAS) discovery response, or an EAS discovery notification.

14. A method performed by a first edge enabler server (EES), the method comprising:
sending a control message to a User Equipment (UE) indicating that the first EES is scheduled to be shut down or be unavailable.

15. A non-transitory computer readable medium storing a program for causing a computer to perform a method for a first edge enabler server (EES),
the method comprising sending a control message to a User Equipment (UE) indicating that the first EES is scheduled to be shut down or be unavailable.

16. An edge configuration server comprising:
a memory; and
at least one processor coupled to the memory and configured to:
receive a control message from a first edge enabler server (EES) indicating that the first EES is scheduled to be shut down or be unavailable; and
depending on receiving the control message, send a service provisioning notification or response to a User Equipment (UE) prompting the UE to send an Edge Enabler Client (EEC) registration request to a second EES different from the first EES.

17. The edge configuration server according to claim 16, wherein the service provisioning notification or response indicates a list of one or more EESs not including the first EES and including the second EES.

18. The edge configuration server according to claim 16 or 17, wherein the second EES serves a service area that at least partially overlaps a service area served by the first EES.

19. The edge configuration server according to any one of claims 16 to 18, wherein the at least one processor is configured to select the second EES as an alternative server to the first EES in response to receiving the control message.

20. The edge configuration server according to any one of claims 16 to 19, wherein the control message is an EES registration update request that requests the edge configuration server to update a registration of the first EES.

21. The edge configuration server according to any one of claims 16 to 20, wherein the control message and the service provisioning notification or response each indicate a grace period until the first EES becomes unavailable, or a date and time or period of time when the first EES is unavailable.

22. A method performed by an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) prompting the UE to send an Edge Enabler Client (EEC) registration request to a second EES different from the first EES.

23. A non-transitory computer readable medium storing a program for causing a computer to perform a method for an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) prompting the UE to send an Edge Enabler Client (EEC) registration request to a second EES different from the first EES.

24. An edge configuration server comprising:
a memory; and
at least one processor coupled to the memory and configured to:
receive a control message from a first edge enabler server (EES) indicating that the first EES is scheduled to be shut down or be unavailable; and
depending on receiving the control message, send a service provisioning notification or response to a User Equipment (UE) indicating that the first EES is scheduled to be shut down or be unavailable.

25. The edge configuration server according to claim 24, wherein the service provisioning notification or response causes the UE to send an edge enabler client (EEC) registration request to a second EES different from the first EES.

26. The edge configuration server according to claim 24, wherein the service provisioning notification or response causes the UE to send an edge enabler client (EEC) deregistration request to the first EES.

27. The edge configuration server according to claim 24, wherein the service provisioning notification or response causes the UE to determine whether to send an edge enabler client (EEC) registration request to a second EES or an EEC deregistration request to the first EES.

28. The edge configuration server according to any one of claims 24 to 27, wherein the control message is an EES registration request that requests the edge configuration server to update a registration of the first EES.

29. The edge configuration server according to any one of claims 24 to 28, wherein the control message and the service provisioning notification or response each indicate a grace period until the first EES becomes unavailable, or a date and time or period of time when the first EES is unavailable.

30. A method performed by an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) indicating that the first EES is scheduled to be shut down or be unavailable.

31. A non-transitory computer readable medium storing a program for causing a computer to perform a method for an edge configuration server, the method comprising:
receiving a control message from a first edge enabler server (EES) indicating that the first EES is scheduled to be shut down or be unavailable; and
depending on receiving the control message, sending a service provisioning notification or response to a User Equipment (UE) indicating that the first EES is scheduled to be shut down or be unavailable.

32. A User Equipment (UE) comprising:
a memory; and
at least one processor coupled to the memory and configured to:
receive a control message from a first edge enabler server (EES) or an edge configuration server indicating that the first EES is scheduled to be shut down or be unavailable; and
depending on receiving the control message, send an edge enabler client (EEC) registration request to a second EES different from the first EES.

33. The UE according to claim 32, wherein the at least one processor is configured to determine, based on the control message, whether to send the EEC registration request to the second EES or an EEC deregistration request to the first EES.

34. The UE according to claim 32 or 33, wherein the control message indicates a grace period until the first EES becomes unavailable, or a date and time or period of time when the first EES is unavailable.

35. The UE according to any one of claims 32 to 34, wherein the control message is a service provisioning notification or response sent by the edge configuration server.

36. The UE according to any one of claims 32 to 34, wherein the control message is sent by the first EES.

37. The UE according to claim 36, wherein the control message is an edge enabler client (EEC) registration update response, an EEC registration response, an EEC deregistration response, an edge application server (EAS) discovery response, or an EAS discovery notification.

38. A method performed by a User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) registration request to a second EES different from the first EES.

39. A non-transitory computer readable medium storing a program for causing a computer to perform a method for User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) registration request to a second EES different from the first EES.

40. A User Equipment (UE) comprising:
a memory; and
at least one processor coupled to the memory and configured to:
receive a control message from a first edge enabler server (EES) or an edge configuration server indicating that the first EES is scheduled to be shut down or be unavailable; and
depending on receiving the control message, send an edge enabler client (EEC) deregistration request to the first EES.

41. The UE according to claim 40, wherein the at least one processor is configured to determine, based on the control message, whether to send an EEC registration request to a second EES different from the first EES or the EEC deregistration request to the first EES.

42. The UE according to claim 40 or 41, wherein the control message indicates a grace period until the first EES becomes unavailable, or a date and time or period of time when the first EES is unavailable.

43. The UE according to any one of claims 40 to 42, wherein the control message is a service provisioning notification or response sent by the edge configuration server.

44. The UE according to any one of claims 40 to 42, wherein the control message is sent by the first EES.

45. The UE according to claim 44, wherein the control message is an edge enabler client (EEC) registration update response, an EEC registration response, an EEC deregistration response, an edge application server (EAS) discovery response, or an EAS discovery notification.

46. A method performed by a User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) deregistration request to the first EES.

47. A non-transitory computer readable medium storing a program for causing a computer to perform a method for User Equipment (UE), the method comprising:
receiving a control message from a first edge enabler server (EES) or an edge configuration server indicating that the first EES is scheduled to be shut down or be unavailable; and
depending on receiving the control message, sending an edge enabler client (EEC) deregistration request to the first EES.
